# DEMANDE DE BREVET EUROPEEN

(11) **EP 2 009 761 A1**
(43) Date de publication de la demande: **31.12.2008**
(21) Numéro de dépôt: 07290829.6
(22) Date de dépôt: 29.06.2007
(51) Int. Cl.: H02J 7/00

(54) **Système à appareil consommateur d'énergie électrique à source rechargeable intégrée et à source d'énergie extérieure**

(71) Demandeur: Kapa Reynolds, 78400 Chatou (FR)
(72) Inventeur: Chuang Long Fu, Taipei (TW)
(74) Mandataire: Berger, Helmut

(57) **Abrégé**

L'invention concerne un système comprenant un appareil consommateur d'énergie électrique (3) tel qu'un téléphone portable, équipé d'une source d'énergie électrique rechargeable intégrée, un dispositif de source d'énergie extérieure (1) et un câble de connexion (2) du dispositif de source (1) à l'appareil (3).
L'invention est caractérisée en ce que le dispositif de source (1) extérieure comporte un module (6) à plusieurs piles susceptibles d'être connectées à l'appareil (3) et constituent une source d'énergie électrique permettant de charger complètement la batterie interne de l'appareil.
L'invention est utilisable pour des téléphones portables.

## Description

L'invention concerne un système du type comprenant un appareil consommateur d'énergie électrique tel qu'un téléphone portable, équipé d'une source d'énergie intégrée rechargeable, une source d'énergie électrique extérieure du type à pile et un câble de connexion de la source à l'appareil.

Des systèmes de ce type sont déjà connus, mais présentent l'inconvénient que la source d'énergie électrique extérieure ne constitue qu'une source d'appoint permettant à l'appareil de fonctionner seulement un laps de temps limité.

L'invention a pour but de pallier cet inconvénient.

Pour atteindre ce but, le système selon l'invention est caractérisé en ce que la source extérieure est un dispositif susceptible de comporter une pluralité de pile permettant un chargement complet de la batterie interne.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :
- la figure 1 est une vue en perspective d'un système selon l'invention comportant un téléphone portable connecté à un dispositif de source d'énergie électrique extérieure rechargeable ;
- la figure 2 est une vue en perspective montrant le dispositif de source d'énergie électrique rechargeable selon l'invention monté sur un dispositif de rechargement à partir du réseau ;
- la figure 3 est une vue en perspective éclatée montrant les différents composants du système selon l'invention, réalisés sous forme de modules assemblables ;
- la figure 4 est une vue en coupe selon la ligne IV-IV de la figure 3 ;
- la figure 5 est une vue en coupe le long de la ligne V-V de la figure 2 ; et
- la figure 6 est une vue en perspective, éclatée du dispositif de chargement à partir du réseau, selon l'invention.

Le système selon l'invention sera décrit ci-après, à titre d'exemple, dans son utilisation pour recharger la batterie interne d'un téléphone portable. Bien entendu le système selon l'invention est utilisable pour tout autre appareil consommateur électrique à batterie interne rechargeable compatible.

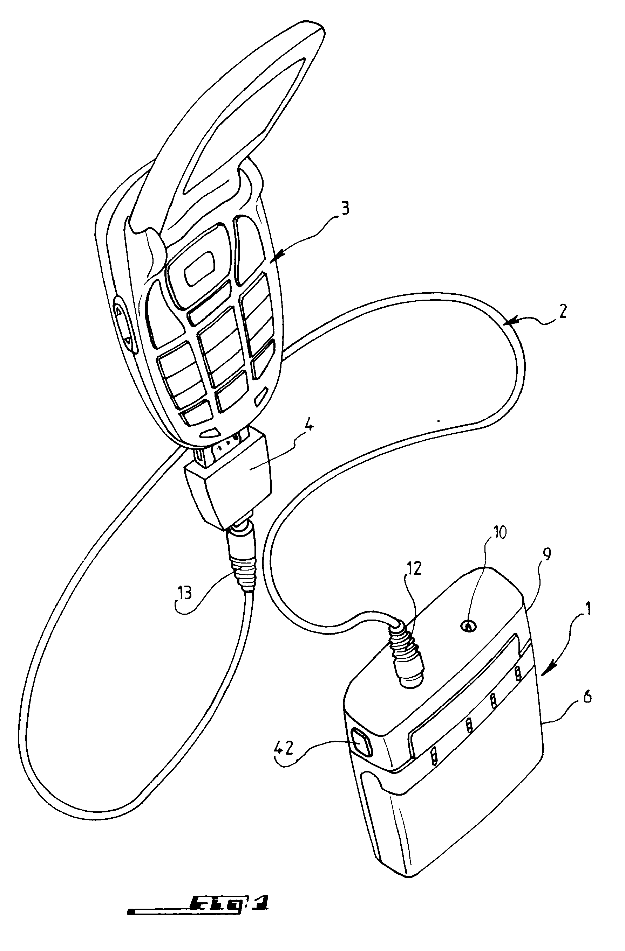

Sur la figure 1 une source d'énergie électrique autonome rechargeable selon l'invention, désignée par la référence 1 est connectée par un câble de connexion 2 à un téléphone portable 3, par l'intermédiaire d'un connecteur adaptateur 4 interposé entre le câble 2 et le téléphone portable 3.

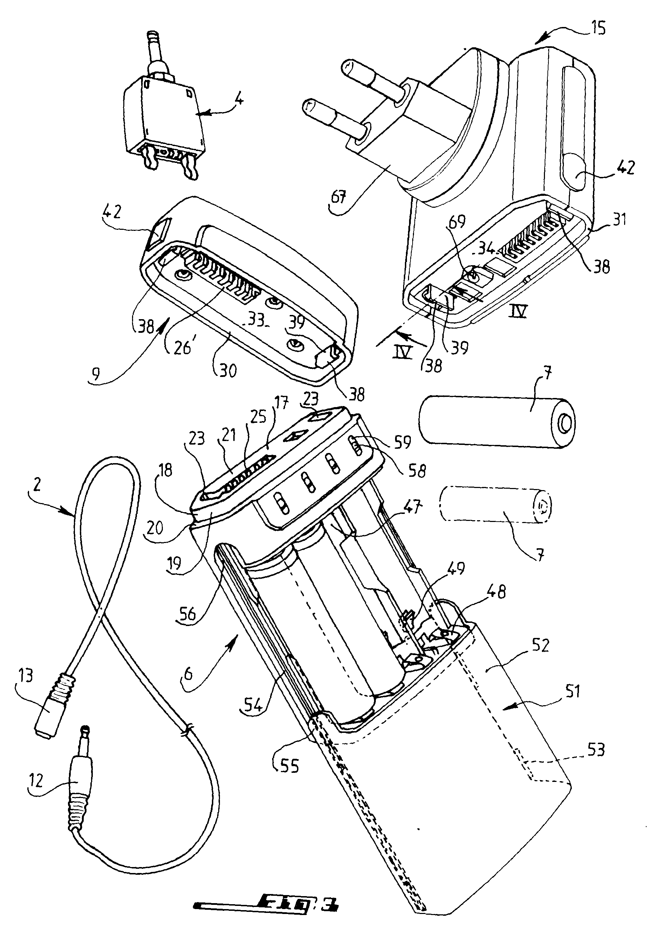

Comme on le voit notamment sur la figure 3, le dispositif de source d'énergie électrique autonome 1 comporte deux modules amoviblement assemblables à l'aide d'un mécanisme de fixation réversible rapide, qui sera expliqué en détail plus loin, à savoir un module 6 qui loge une pluralité de piles avantageusement rechargeables 7, 7' dans l'exemple représenté quatre piles, et un module interface 7, permettant le branchement du câble 2 au dispositif de source 1. A cette fin le module 9 comporte sur la figure 3 deux prises femelles 10 de réception du connecteur mâle 12 du câble 2 qui porte à son autre extrémité un connecteur universel 13 susceptible d'être fiché dans l'adaptateur 4. Il ressort notamment de la figure 1, que le dispositif présente une forme parallélépipédique, compacte et esthétique, comme d'ailleurs chacun des deux modules.

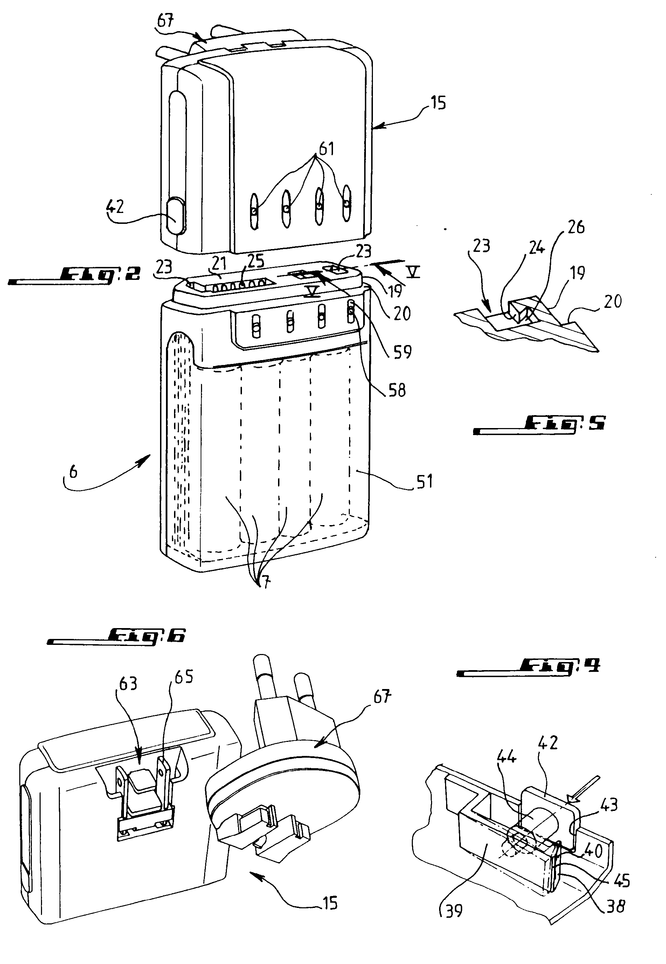

Comme le montre la figure 2, le dispositif de source autonome 1 est rechargeable et peut être, à cette fin, branché sur un dispositif 15 de chargement à partir du réseau, également réalisé sous forme d'un module de forme générale parallélépipédique dont les dimensions correspondent à celles du dispositif de source 1, de façon qu'à l'état assemblé, les deux modules constituent un ensemble parallélépipédique régulier esthétique. L'assemblage des deux modules se fait à l'aide d'un même mécanisme de fixation réversible rapide déjà mentionné plus haut au sujet du montage du module interface 9 sur le module 6 de logement des piles. Grâce à cette utilisation du même mécanisme de fixation, le module d'interface 9 et le module 15 de rechargement à partir du réseau sont interchangeables en ce qui concerne leur montage sur le module 6.

Pour assurer la fixation rapide, l'extrémité frontale 17 de réception des modules 9 et 15 présente un profil étagé créé par un décrochement périphérique annulaire 18 laissant subsister une face périphérique parallèle à l'axe du module, notée 19 et une face annulaire périphérique 20 perpendiculaire à l'axe, les faces 19 et 20 présentant un profil en forme d'un L. Dans la face frontale plane 21 restante, délimitée par le décrochement 18 et qui est de forme sensiblement rectangulaire, est pratiqué au niveau de chaque côté court un creux 23 en forme d'un rectangle qui s'étend jusqu'à une profondeur prédéterminée. Comme le montre la figure 5, la paroi latérale 24, adjacente au côté court du décrochement 18 présente une contre-dépouille 26. La face frontale comporte en outre un connecteur électrique 25 de connexion au connecteur électrique complémentaire 26 du module de chargement 15 et au connecteur 26' du même type du module interface 9.

Pour la fixation sur cette extrémité étagée 17 du module 6, les extrémités d'assemblage respectivement 28 et 29 des modules d'interface 9 et de chargement 15 présentent une forme complémentaire à celle de l'extrémité d'assemblage 17 du module 6. Chacun des modules 9 et 15 comprend un rebord périphérique axial respectivement 30 et 31 configuré pour s'engager dans le décrochement périphérique 18 de l'extrémité d'assemblage 17 du module 6. La face frontale en retrait 33 du module d'interface 9 et la face frontale 34 correspondant du module de chargement 15 sont planes de façon à venir en contact avec la face d'extrémité 21 du module 6. De chaque face frontale 33, 34 fait saillie le connecteur électrique 36, 36' qui assure, en coopération avec le connecteur femelle 25 du module 6 la connexion électrique des deux modules assemblés.

De chacune des faces frontales 33, 34 des modules 9 et 15 font saillies, au niveau des côtés courts, des pattes à crochet élastiquement déformables 38 qui sont représentés plus en détail à la figure 4. Cette figure montre que chaque patte à crochet 38 porte à son extrémité extérieure un élément de crochet 40. L'extrémité opposée de la patte est reliée à u pied 41 en forme d'un L de façon à pouvoir être écartée élastiquement de son orientation sensiblement parallèle à l'axe du module correspondant, perpendiculairement en direction de l'axe du module, comme cela est illustré par des lignes fantômes sur la figure 4. Cette déflexion latérale élastique peut être commandée manuellement par pression sur une touche 42 extérieure disposée dans une fenêtre appropriée 43 pratiquée dans la paroi périphérique extérieure du module 9 ou 15. La pression exercée sur la touche est transmise à la patte 39 par un plot de liaison 44. Il est encore à noter que la face frontale de chaque élément crochet 40 est en forme d'une rampe inclinée 45.

Lors du montage sur le module de source d'énergie 6 soit du module d'interface 9, soit du module de chargement 15, chacun des crochets 40 s'engage dans un des deux creux 23 dans la face frontale d'assemblage 23 du module 6. Lors de l'engagement des crochets dans les creux, le glissement des surfaces de rampe 45 sur le bord des creux provoque la déflexion élastique des pattes dont les crochets 40 se verrouillent ensuite à l'intérieur des creux en venant en prise dans les contre-dépouilles 26. Il se produit ainsi un verrouillage rapide des deux modules l'un sur l'autre.

Ce verrouillage peut être vaincu et rendu réversible par appui manuel sur les touches externes 42, comme cela est indiqué par la flèche sur la figure 4.

Concernant la structure des modules, on constate que le module 6 du dispositif de source comprend un compartiment 47 de réception de quatre piles 7 ou 7' disposées les unes à côté des autres, en parallèle, entre des contacts électriques 48 en ce qui concerne des piles 7 de longueur normale. Pour des piles 7' d'une longueur plus faible, le compartiment prévoit au niveau de son extrémité inférieure un contact électrique 49 décalé par rapport au contact électrique en direction de l'extrémité supérieure avant.

Le compartiment 47 de logement des piles est pourvu d'un couvercle de fermeture 51 transparent coulissant en forme d'un U dont les bords extérieurs des branches 52 comportent des éléments en saillie 53 susceptibles de coulisser dans des rainures appropriées 54 prévues dans la paroi extérieure du compartiment 47. Les branches 52 du couvercle comportent à leurs extrémités avants des languettes 55 destinées à s'engager, dans la position de fermeture du couvercle, dans des évidements complémentaires 56 au niveau de l'extrémité supérieure avant du module. Dans la partie avant creuse du module sont disposés les éléments de connexion électrique des piles 7, 7' au connecteur extérieur 25. On constate en outre qu'au dessus de chaque pile est prévu un élément coulisseau commutateur 58 déplaçable dans une fenêtre 59.

En se reportant à la figure 2, on constate que le module 15 de chargement à partir du réseau comporte au dessus de chaque coulisseau commutateur 58 une diode électroluminescente 61 destinée à indiquer si les piles 7, 7' sont en train d'être chargées.

Egalement de forme générale parallélépipédique le module 15 comporte un dispositif connu en soi 63 de montage amovible par coulissement sur de languettes électriquement conductrices et pivotantes 65 d'un organe de connecteur mâle 67 de branchement sur le secteur, qui est connu en soi. Dans une variante, le connecteur au réseau pourrait être solidaire à demeure du module 15.

Le fonctionnement et l'utilisation du système selon l'invention ressort déjà de la description qui vient d'être faite, avec référence aux figures. Le module de source électrique autonome 6 peut être connecté à l'état assemblé au module d'interface 9, selon la figure 1, par l'intermédiaire du câble 2, à un appareil consommateur d'énergie électrique tel que le téléphone portable 3 représenté. Le module 6 peut aussi être monté sur le module de chargement 15 pour recharger les piles 7, 7' dans le compartiment 47 à partir du réseau. L'appareil 3 peut aussi être connecté à l'aide du câble 2 directement sur le module de chargement 15. A cette fin il suffit d'introduire le connecteur mâle 12 du câble dans l'élément femelle 69 prévu dans la face d'assemblage 34 de ce module. Le dispositif de source autonome 1 selon l'invention, grâce à la pluralité des piles rechargeables ou non, qu'il peut loger, permet de charger complètement la batterie interne de l'appareil 3, contrairement aux dispositifs connus qui ne constituent que des sources d'énergie d'appoint. Grâce à sa structure modulaire, son module de source d'énergie 6 peut être connecté directement soit sur le module d'interface 9 pour la connexion à l'appareil 3, soit directement sur le module de chargement 15. Grâce à la réalisation de chaque module sous forme d'un corps parallélépipédique on obtient chaque fois un ensemble compact, rigide et esthétique facilement assemblable et désassemblable à l'aide des moyens de fixation rapide qui ont été décrits en détail. Chaque assemblage du module 6 soit au module 9 (figure 1), soit au module 15 (figure 2) résulte en un ensemble parallélépipédique, compacte et esthétique et facilement maniable.

## Revendications

1. Système comprenant un appareil consommateur d'énergie électrique tel qu'un téléphone portable, équipé d'une source d'énergie électrique rechargeable intégrée, un dispositif de source d'énergie extérieure et un câble de connexion du dispositif de source à l'appareil, **caractérisé en ce que** le dispositif de source (1) extérieure comporte un module (6) à plusieurs piles (7, 7') susceptibles d'être connectées à l'appareil (3) et constituent une source d'énergie électrique permettant de charger complètement la batterie interne de l'appareil.

2. Système selon la revendication 1, **caractérisé en ce que** le module (6) est susceptible d'être connecté à un dispositif (15) de chargement à partir du réseau, pour le chargement des piles (7, 7') logés à l'intérieur du module.

3. Système selon la revendication 2, **caractérisé en ce que** le dispositif de source électrique extérieur autonome (1) est formé par assemblage amovible du module (6) et d'un module d'interface (9) auquel est connecté le câble (2), et constitue, à l'état assemblé, un ensemble parallélépipédique compacte.

4. Système selon la revendication 2, **caractérisé en ce que** le dispositif (15) de chargement à partir du réseau est formé par un module parallélépipédique qui, assemblé au module de source d'énergie (6) forme un ensemble parallélépipédique compacte.

5. Système selon l'une des revendications 3 ou 4, **caractérisé en ce que** les modules sont susceptibles d'être assemblés à l'aide de moyens de fixation rapide et réversible.

6. Système selon la revendication 5, **caractérisé en ce que** les moyens de fixation rapide et réversible sont du type à pattes élastiquement déformables à crochets (39, 40), et à creux à contre-dépouille (23, 26).

7. Système selon l'une des revendications 3 à 6, **caractérisé en ce que** le module (6) comprend un compartiment (47) de logement de ladite pluralité de piles (7, 7') susceptibles d'être fermées par un couvercle amovible (51).

8. Système selon l'une des revendications 3 à 7, **caractérisé en ce que** le module de chargement (15) comporte des moyens indicateurs de chargement, associés à chaque pile (7, 7') du module (6).
